(19) Europäisches Patentamt
European Patent Office
Office européen des brevets

(11) Veröffentlichungsnummer: **0 351 590**
**A2**

(12) **EUROPÄISCHE PATENTANMELDUNG**

(21) Anmeldenummer: **89111528.9**

(22) Anmeldetag: **24.06.89**

(51) Int. Cl.4: **C08L 71/12 , C08L 77/00 , C08L 25/00 , C08L 57/00**

(30) Priorität: **16.07.88 DE 3824144**

(43) Veröffentlichungstag der Anmeldung:
**24.01.90 Patentblatt 90/04**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Mühlbach, Klaus, Dr.**
**Dr.-Heinrich-Winter-Strasse 19**
**D-6148 Heppenheim(DE)**
Erfinder: **Taubitz, Christof, Dr.**
**In der Dreispitz 15**
**D-6706 Wachenheim(DE)**
Erfinder: **Benker, Klaus**
**Fürstenweg 52**
**D-6730 Neustadt(DE)**
Erfinder: **Heckmann, Walter, Dr.**
**Geiersbergstrasse 2**
**D-6940 Weinheim(DE)**
Erfinder: **Brandt, Hermann, Dr.**
**231 Manor Haus Hill**
**Fort Mill South Carolina 29715(US)**
Erfinder: **Zizlsperger, Johann, Dr.**
**In der Hohl 6**
**D-6905 Schriesheim(DE)**

(54) **Thermoplastische Formmassen auf Basis von modifiziertem Polyphenylenether und Polyamid.**

(57) Thermoplastische Formmassen, enthaltend als wesentliche Komponenten

A) 5 - 95 Gew.-% eines modifizierten Polyphenylenethers,
B) 5 - 95 Gew.-% eines Polyamids sowie darüber hinaus
C) 0 - 90 Gew.-% eines nicht-modifizierten Polyphenylenethers,
D) 0 - 45 Gew.-% eines vinylaromatischen Polymeren,
E) 0 - 40 Gew.-% eines schlagzäh modifizierenden Kautschuks und
F) 0 - 60 Gew.-% Zusatzstoffe und Verarbeitungshilfsmittel, herstellbar durch Vermischen der Komponenten A) bis F) bei Temperaturen zwischen 270 und 370 °C während 15 bis 90 Sekunden, wobei die Komponente A) zu Beginn des Mischens eine Temperatur über 350 und unter 370 °C aufweist, deren Herstellung und Verwendung.

EP 0 351 590 A2

## Thermoplastische Formmassen auf Basis von modifiziertem Polyphenylenether und Polyamid

Die Erfindung betrifft thermoplastische Formmassen, enthaltend als wesentliche Komponenten

(A) 5 - 95 Gew.-% eines modifizierten Polyphenylenethers,

(B) 5 - 95 Gew.-% eines Polyamids sowie darüber hinaus

(C) 0 - 90 Gew.-% eines nicht-modifizierten Polyphenylenethers,

(D) 0 - 45 Gew.-% eines vinylaromatischen Polymeren,

(E) 0 - 40 Gew.-% eines schlagzäh modifizierenden Kautschuks und

(F) 0 - 60 Gew.-% Zusatzstoffe und Verarbeitungshilfsmittel, herstellbar durch Vermischen der Komponenten A) bis F) bei Temperaturen zwischen 270 und 370° C während 15 bis 90 Sekunden, wobei die Komponente A) zu Beginn des Mischens eine Temperatur über 350 und unter 370° C aufweist.

Die Mengenangaben der Komponenten A) bis F) in Gew.-% beziehen sich auf das Gesamtgewicht der Komponenten A) bis F).

Außerdem betrifft die Erfindung ein Verfahren zur Herstellung derartiger Formmassen und ihre Verwendung zur Herstellung von Formkörpern.

Thermoplastische Formmassen auf der Basis von Polyphenylenethern und Polyamiden sind z.B. in der EP-A 24 120, EP-A 46 040, EP-A 244 090, EP-A 262 901 und WO-A 87-00540 beschrieben. Aufgrund der bekannten Unverträglichkeit von Polyphenylenether und Polyamid werden zum Teil niedermolekulare und hochmolekulare Haftvermittler zugesetzt. Gemäß EP-A 226 910 kann auch carboxylierter Polyphenylenether eingesetzt werden. Es zeigte sich jedoch, daß die Kerbschlagzähigkeit dieser Formmassen insbesondere bei tiefer Gebrauchstemperatur verbesserungsbedürftig ist.

Werden die Komponenten der Formmassen beim Zusammenmischen zu hohen Temperaturen ausgesetzt, so neigen solche Formmassen aufgrund ihrer schlechten Oxidationsbeständigkeit zum Vergilben, was insbesondere bei helleingefärbten Formteilen von Nachteil ist. In DE-A 37 01 582, DE-A 37 07 796, DE-A 37 22 502 und DE 37 26 283 werden daher Formmassen offenbart, deren Komponenten beim Zusammenmischen nur auf Temperaturen erhitzt werden, die deutlich unter 350° C liegen.

Aufgabe der vorliegenden Erfindung war es, thermoplastiche Formmassen bereitzustellen, die eine gute Schlagzähigkeit insbesondere in der Kälte und gleichzeitig helle Eigenfarbe und Oxidationsbeständigkeit aufweisen.

Erfindungsgemäß wird diese Aufgabe gelöst durch die eingangs definierten thermoplastischen Formmassen.

Bevorzugte Massen dieser Art, ein Verfahren zu ihrer Herstellung und ihre Verwendung zur Herstellung von Formkörpern sind den Unteransprüchen zu entnehmen.

Die Komponente A) ist in den erfindungsgemäßen Formmassen zu 5 bis 95, bevorzugt 30 bis 65, insbesondere 30 bis 45 Gew.-% vorhanden.

Modifizierte Polyphenylenether A) werden im allgemeinen hergestellt aus

$a_1$) 50 bis 99,95 Gew.% eines Polyphenylenethers

$a_2$) 0 bis 45 Gew.% eines vinylaromatischen Polymeren

$a_3$) 0,05 bis 10 Gew.%

$a_{31}$) einer α,ß-ungesättigten Dicarbonsäure oder deren Derivaten der allgemeinen Formel I

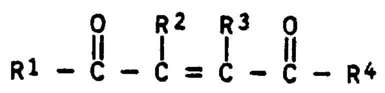

(I)

wobei

$R^1$ und $R^4$ Hydroxylgruppen, Aryloxy-, Alkoxy-, Aralkoxy- oder Cycloalkoxygruppen mit bis zu 12 C-Atomen oder gemeinsam -O-oder -$NR^5$-,

$R^2$ und $R^3$ eine Alkyl- oder Cycloalkylgruppe mit bis zu 12 C-Atomen, eine Arylgruppe, Chlor oder gemeinsam eine Alkylengruppe mit 4 bis 12 C-Atomen oder insbesondere Wasserstoff

$R^5$ Wasserstoff, eine Alkyl-, Cycloalkyl-, Aralkyl- oder Arylgruppe mit bis zu 12 C-Atomen, die ihrerseits durch $C_1$-$C_4$-Alkyl- oder -Alkoxygruppen substituiert sein kann,

darstellen, und/oder

$a_{32}$) eines mindestens eine Amid-Gruppe Lactamgruppe, Epoxidgruppe, Hydroxylgruppe oder Oxazolingruppe enthaltenden Monomeren sowie darüber hinaus

$a_4$) 0 bis 5 Gew.-% eines Radikalstarters und

$a_5$) 0 bis 80 Gew.-% weiterer pfropfaktiver Monomerer wobei die Angaben der Komponenten $a_1$) bis $a_5$) in Gew.-% sich jeweils auf das Gesamtgewicht der Komponenten $a_1$) bis $a_5$) beziehen.

Der Anteil der Komponente $a_1$), bezogen auf die Summe der Komponenten $a_1$) bis $a_5$) beträgt 50 bis 99,95, vorzugsweise 50 bis 98 und insbesondere 70 bis 98,6 Gew.%.

Bei der Komponente $a_1$) handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Die eingesetzten Polyphenylenether weisen im allgemeinen ein Molekulargewicht (Gewichtsmittelwert) im Bereich von 10.000 bis 80.000, vorzugsweise von 20.000 bis 60.000 auf.

Nur beispielsweise seien hier einige Polyphenylenether aufgeführt, wie sie u.a. in O. Olabisi, l.c., S. 224 bis 230 und 245 genannt werden, wie Poly(2,6-diethyl-1,4-phenylen)ether, Poly(2-methyl-6-ethyl-1,4-phenylen)ether, Poly(2-methyl-6-propyl-1,4-phenylen)ether, Poly-(2,6-dipropyl-1,4-phenylen)ether, Poly(2-ethyl-6-propyl-1,4-phenylen)ether, bevorzugt Poly(2,6-dimethyl-1,4-phenylen)ether oder Copolymere, wie solche, die Einheiten von 2,3,6-Trimethylphenol enthalten, außerdem Polymermischungen. Besonders bevorzugt ist jedoch Poly(2,6-dimethyl-1,4-phenylen)ether.

Die Komponente $a_2$), die gegebenenfalls bei der Herstellung des modifizierten Polyphenylenethers zugegeben wird, ist ein vinylaromatisches Polymer, das vorzugsweise mit dem eingesetzten Polyphenylenether verträglich ist.

Das Molekulargewicht dieser Polymeren liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol und p-Methylstyrol genannt; in untergeordneten Anteilen (vorzugsweise nicht mehr als 20, insbesondere nicht mehr als 8 Gew.%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können.

Verfahren zur Herstellung solcher vinylaromatischer Polymeren sind an sich bekannt und in der Literatur beschrieben, so daß sich hier nähere Angaben erübrigen.

Nur beispielsweise seien hier als geeignete Polymerisationsverfahren die Masse-, Suspensions-, Emulsions- oder Lösungspolymerisation erwähnt.

Der Anteil des vinylaromatischen Polymeren $a_2$) an der Komponente A) liegt im Bereich von 0 bis 45, vorzugsweise 1 bis 35 und insbesondere 1 bis 20 Gew.%.

Als Komponente $a_3$) wird bei der Herstellung des modifizierten Polyphenylenethers A) mindestens eine der Verbindungen $a_{31}$) und $a_{32}$) eingesetzt.

Prinzipiell können auch Mischungen verschiedener Verbindungen $a_{31}$) und $a_{32}$) eingesetzt werden, doch ist im allgemeinen die Verwendung nur einer dieser Verbindungen vorteilhaft.

Bei der Komponente $a_{31}$) handelt es sich um Verbindungen der allgemeinen Formel I. Die Substituenten der Verbindung I müssen, was sich allerdings von selbst versteht, so beschaffen sein, daß sie die Modifizierungsreaktion nicht verhindern. Es handelt sich daher im allgemeinen bei den Verbindungen $a_{31}$) um $\alpha,\beta$-ungesättigte Dicarbonsäuren, deren Anhydride, Imide, Monoester, oder Diester dieser Dicarbonsäuren.

Als Beispiele für Dicarbonsäuren seien Maleinsäure, Fumarsäure, Methylmaleinsäure, Butenylbernsteinsäure, Tetrahydrophthalsäure und Chlormaleinsäure genannt, von denen Fumarsäure besonders bevorzugt wird.

Als Anhydride beispielhaft erwähnt Maleinsäureanhydrid, Methylmaleinsäureanhydrid und Chlormaleinsäureanhydrid.

Bevorzugte Imide leiten sich von der Maleinsäure ab. Die Substituenten $R^2$, $R^3$ sind dabei Wasserstoff und $R^5$ ist eine Alkylgruppe mit 1 bis 4 C-Atomen, beispielsweise Methyl-, Ethyl- oder n-, i- oder t-Butyl, eine Cycloakylgruppe mit bis zu 8 C-Atomen oder eine Phenylgruppe, wobei $R^5$ durch $C_1$-$C_4$-Alkylgruppen substituiert sein kann. Nur beispielhaft seien als Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)-maleinimid, N-Benzylmaleinimid, N-(1-Naphthyl)maleinimid oder deren Mischungen genannt. Von diesen wird N-Phenylmaleinimid besonders bevorzugt.

Die Halbester leiten sich bevorzugt von primären und sekundären Monoalkoholen, wie Methanol, Ethanol, n- und i-Propanol, n- und i-Butanol, Pentanolen, Hexanolen, Heptanolen, Octanolen, z.B. 2-Ethylhexylalkohol und höheren Alkoholen wie Dodecanolen und cycloaliphatischen Alkoholen, z.B. Cyclohexanol ab. Weiter eignen sich auch Alkohole mit aromatischen Struktureinheiten wie z.B. Benzylalkohol. Bevorzugt werden jedoch Alkanole mit 1 bis 6 C-Atomen.

Ebenfalls geeignet als Komponente $a_3$) sind die Verbindungen $a_{32}$). Es kann sich dabei um mindestens eine Amidgruppe enthaltende Monomere mit einer polymerisierbaren Doppelbindung oder Dreifachbindung handeln, vorzugsweise solche der allgemeinen Formeln II oder III

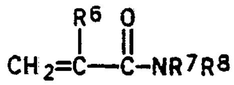 (II)

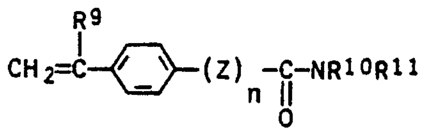 (III),

wobei $R^6$, $R^7$, $R^8$, $R^9$, $R^{10}$ und $R^{11}$ Wasserstoff, Alkyl- oder Alkoxygruppen mit 1 bis 12 C-Atomen, Cycloalkylgruppen mit bis zu 12 C-Atomen oder Arylgruppen und Z Alkenylgruppen mit 1 bis 12 C-Atomen darstellen und n den Wert 0 oder 1, vorzugsweise 0 hat.

Bevorzugte Substituenten $R^7$, $R^8$, $R^{10}$ und $R^{11}$ sind Wasserstoff, Alkylgruppen mit 1 bis 10 C-Atomen, Cycloalkylgruppen mit bis zu 8 C-Atomen oder Arylgruppen, vorzugsweise Phenyl. $R^6$ und $R^9$ sid bevorzugt H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt.

Bevorzugt werden Acrylamid, Methacrylamid, N-Phenylacrylamid und N-Phenylmethacrylamid verwendet.

Eine weitere Gruppe bevorzugt verwendeter Amid-Gruppen enthaltender Monomerer sind Mono- und Diamide der Dicarbonsäuren, die sich ergeben, wenn in der allgemeinen Formel I (Komponente $a_{31}$) $R^1$ und/oder $R^4$ eine $NH_2$-Gruppe darstellen.

Zur Herstellung dieser Mono- und Diamide können die Dicarbonsäuren oder deren Anhydride mit den entsprechenden Aminen umgesetzt werden. Als Amine seien hier nur sekundäre Amine wie N-Methyl- oder N-Ethylalkylamine und N-Alkylaniline, z.B. N-Methylanilin genannt.

Als Komponente $a_{32}$) kann auch mindestens eine Lactam-Gruppe enthaltendes Monomer mit einer polymerisierbaren Doppelbindung eingesetzt werden.

Vorzugsweise werden Lactame der allgemeinen Struktur IV

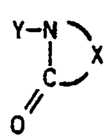 (IV)

verwendet, wobei X eine lineare oder verzweigte Alkylengruppe mit 2 bis 15 C-Atomen darstellt und Y die allgemeinen Formel

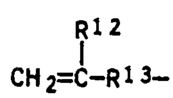

hat,

wobei $R^{12}$ ein Wasserstoffatom, eine Alkyl- oder Alkoxygruppe mit 1 bis 4 C-Atomen und $R^{13}$ einen zweibindigen Substituenten

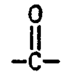

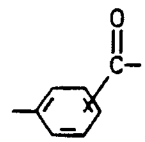

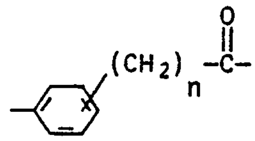
,

wobei n eine ganze Zahl von 1 bis 4 ist, darstellen.

Bevorzugte Substitueten Y sind ganz allgemein Vinyl-, Acryloyl-, Methacryloyl- oder Reste mit Styrol-Grundstrukturen.

Besonders bevorzugt sind Lactameinheiten, die zu Polyamiden polymerisierbar oder copolymerisierbar sind, wie diese in Houben-Weyl, Methoden der organ. Chemie, Band X/2, S. 511 bis 587, (1958) und Band XIV/2, S. 111 bis 131, beschrieben werden.

Beispielsweise seien genannt:

ß-Propiolactame (Azetidin-2-one), wie

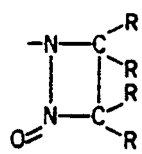

wobei R gleiche oder verschiedene Alkylgruppen mit 1 bis 6 C-Atomen oder Wasserstoff sind. Derartige Verbindungen sind beschrieben bei R. Graf, Angewandte Chemie, 74, 523 bis 530, (1962) und H. Bastian, Angewandte Chemie, 80, 304 bis 312, (1968).

Nur beispielhaft sei als ein Vertreter dieser Gruppe 3,3′-Dimethyl-3-propiolactam genannt.

Ebenfalls bevorzugte Lactam-Einheiten sind 2-Methylpyrrolidone

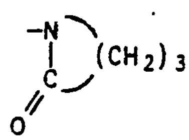
,

ε-Caprolactam, wie

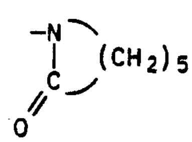

und außerdem 7-Önantholactam, 8-Capryllactam und 12-Laurinlactam, wie sie bei K. Dachs, Angewandte Chemie, 74, 540 bis 545, (1962) beschrieben werden. Ganz besonders bevorzugt sind 2-Pyrrolidone und 6-Caprolactame.

Es können auch Mischungen dieser Verbindungen eingesetzt werden.

Vorzugsweise werden die Lactameinheiten über eine Carbonylgruppe am Stickstoff in den Polyphenylenether A eingebaut, wie dies nachstehend allgemein dargestellt ist.

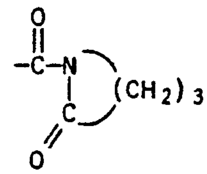

Als besonders bevorzugtes Beispiel einer Lactamgruppe enthaltenden Komponente sei hier nur N-(Meth)acryloyl-ε-caprolactam

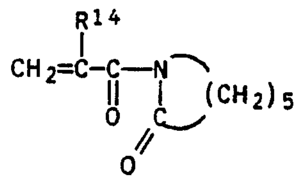

genannt,
wobei $R^{14}$ ein Wasserstoffatom oder eine Methylgruppe sein kann.

Als epoxidgruppenhaltiges Monomers $a_{32}$) ist prinzipiell jede Verbindung mit einer polymerisierbaren Doppelbindung oder Dreifachbindung geeignet, die eine Epoxidgruppe im Molekül aufweist. Vorzugsweise werden jedoch Monomere verwendet, die Glycidylgruppen tragen, insbesondere Glycidylacrylat und Glycidylmethacrylat. Es eignen sich jedoch auch Glycidylderivate anderer Säuren und Glycidylallyl- und Vinylether. Diese sind allgemein durch die Struktureinheit

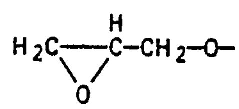

im Molekül charakterisiert.

Die Oxazolin-Gruppen enthaltenden Monomeren $a_{32}$) haben üblicherweise die allgemeine Formel V

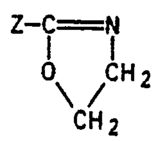

V ,

wobei Z eine polymerisierbare Doppelbindung oder gegebenenfalls Dreifachbindung enthält. Bevorzugte Substituenten Z sind

$CH_2 = CR^{15}-$ ,

$CH_2 = CR^{15}- \overset{O}{\overset{\|}{C}} -$ ,

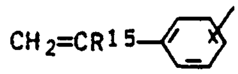,

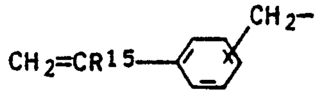,

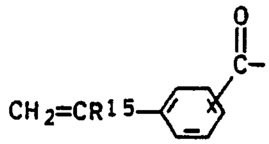,

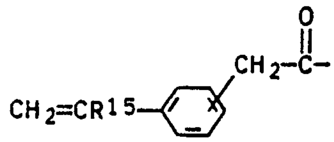

und 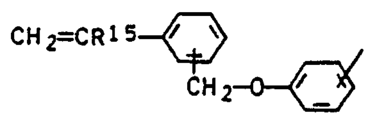,

wobei $R^{15}$ ein Wasserstoffatom oder eine Alkyl- oder Alkoxygruppe mit 1 bis 6 C-Atomen sein kann, z.B. Methyl, i- und n-Propyl oder Butyl-, um nur einige zu nennen. Besonders bevorzugt sind Vinyloxazoline der allgemeinen Formel VI

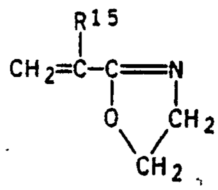 VI,

wobei $R^{15}$ die zuvor angegebene Bedeutung hat und vorzugsweise ein Wasserstoffatom oder eine Methylgruppe ist.

Als Hydroxylgruppen enthaltene Monomere $a_{32}$) werden im allgemeinen Verbindungen mit einer polymerisierbaren Doppel- oder Dreifachbindung eingesetzt. Vorteilhaft sind Verbindungen der allgemeinen Formel VII

$CH_2 = CR^{16} - K - OH$ VII,

wobei $R^{16}$ = H oder $C_1$- bis $C_8$-Alkyl und

K = 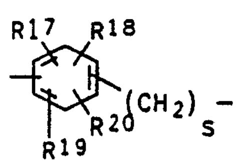, 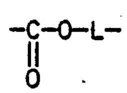, 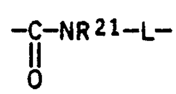 oder

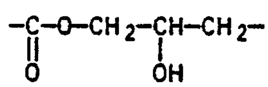

ist, wobei $R^{17}$ bis $R^{20}$ = H, $C_1$- bis $C_8$-Alkyl, CN oder $NO_2$ und s = 0, 1 oder 2 ist, L ein Brückenglied bedeutet wie $C_1$- bis $C_8$-Alkylen, Cyclohexylen

oder

L = $-(CH_2)_j-O-[-\underset{\underset{O}{\|}}{C}(CH_2)_5-]_k-$,

wobei j = 2 bis 10 und k = 1 bis 10 ist,

oder

L = $-(CH_2-CH_2-O-)_h-CH_2-CH_2-$,

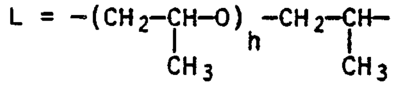 ,

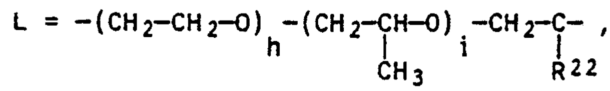 ,

wobei h, i = 1, 2 oder 3 bis 20 ist, $R^{21}$ = H oder $C_1$- bis $C_8$-Alkyl bedeutet und $R^{22}$ = H oder $CH_3$ ist.

Besonders bevorzugt sind ω-Hydroxyalkylacrylate oder -methacrylate mit einem $C_1$-$C_8$-Alkylenrest.

Der Anteil der Komponente $a_3$) beträgt 0,05 bis 10, vorzugsweise 0,1 bis 5 und insbesondere 0,3 bis 3 Gew.%, bezogen auf die Summe der Komponenten $a_1$) bis $a_5$).

Als Komponente $a_4$) können bei der Herstellung der modifizierten Polyphenylenether A) bis zu 5 Gew.% an Radikalstartern eingesetzt werden.

Der Anteil der Komponente $a_4$) ist in der Regel geringer als die Summe der Anteile der Komponenten $a_3$) und $a_5$).

Es werden 0 bis 5, vorzugsweise 0,02 - 0,09 Gew.-% an Radikalstartern eingesetzt.

Prinzipiell können als Radikalstarter die für diesen Zweck bekannten und in der Literatur (z.B. J.K. Kochi, Free Radicals, J. Wiley-Verlag. New York 1973) beschriebenen Verbindungen eingesetzt werden.

In einigen Fällen hat es sich als vorteilhaft herausgestellt, Radikalstarter einzusetzen, deren Halbwertzeit ausreichend groß ist, um sicherzustellen, daß zu dem Zeitpunkt, zu dem der Polyphenylenether aufgeschmolzen ist, eine signifikante Menge an aktivem Radikalstarter vorhanden ist.

Dies hat zur Folge, daß die Komponenten $a_{31}$) bis $a_{32}$) in einer relativ eindeutigen Reaktion mit dem durch den Radikalstarter aktivierten Polyphenylenether reagieren und diesen modifizieren können.

Es ist noch nicht eindeutig geklärt, an welcher Stelle des Polyphenylenether-Moleküls der Radikalstarter angreift, doch deuten erste Erkenntnisse darauf hin, daß die Aktivierung des Poly(2,6-Dimethyl-1,4-phenylen)ethers an den Methylsubstituenten in o-Stellung zum Sauerstoffatom stattfindet und die Komponenten $b_{31}$) bis $b_{32}$) dementsprechend auch überwiegend in dieser Position angreifen.

Beispielsweise seien als Radikalstarter genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvalerisansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Bevorzugt werden organische Hydroperoxide wie Di-isopropylbenzolmonohydroperoxid, Cumolhydroperoxid, tert.-Butylhydroperoxid, p-Menthylhydroperoxid und Pinanhydroperoxid sowie insbesondere hochverzweigte Alkane der allgemeinen Struktur

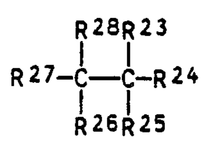 ,

wobei $R^{23}$ bis $R^{28}$ unabhängig voneinander Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem π-Elektronensystem und Stickstoff, Sauerstoff oder Schwefel als Heteroatomen darstellen. Die Substituenten $R^{23}$ bis $R^{28}$ können ihrerseits wieder funktionelle Gruppen als Substituenten enthalten, wie Carboxyl-, Carboxylderivat-, Hydroxyl-, Amino-, Thiol- oder Epoxidgruppen.

Als Beispiel hierfür seien

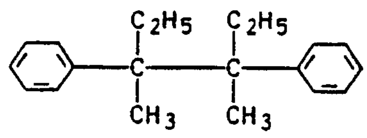

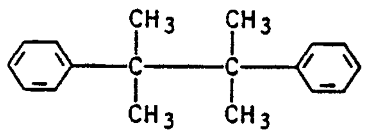

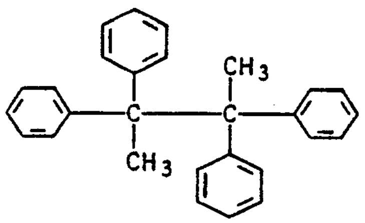

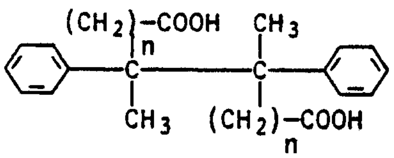

(n = 1 - 5)

genannt. Diese sind zum Teil kommerziell erhältlich. Ganz besonders bevorzugt werden 3,4-Dimethyl-3,4-diphenylhexan und 2,3-Dimethyl-2,3-diphenylbutan. Es hat sich gezeigt, daß Formmassen, deren Komponente A) unter Verwendung dieser beiden Radikalstarter hergestellt wurde, eine besonders gute Fließfähigkeit haben.

Gegebenenfalls können bei der Herstellung des modifizierten Polyphenylenethers A) auch weitere Comonomere $a_5$) eingesetzt werden, die unter den Herstellungsbedingungen mit den Komponenten $a_1$) und gegebenenfalls $a_2$) reagieren bzw. auf diese aufpfropfen. Beispielsweise seien hier Acrylsäure, Methacrylsäure, Acrylate, Methacrylate und vinylaromatische Monomere wie Styrol, $\alpha$-Methylstyrol und Vinyltoluol genannt, um nur einige aufzuführen.

Der Anteil der Komponente $a_5$) beträgt 0 bis 80, vorzugsweise 0 bis 20 Gew.%, bezogen auf die Summe der Komponenten $a_1$) bis $a_5$). Besonders bevorzugt werden Formmassen, die keine Komponente $a_5$) enthalten.

Zur Herstellung des modifizierten Polyphenylenethers A können die Komponenten $a_1$) bis $a_5$) bei 250 bis 350 °C, vorzugsweise 270 bis 350 °C, miteinander umgesetzt werden. Hierzu eignen sich besonders Extruder, da in diesen im allgemeinen eine gute Durchmischung der Komponenten erzielt wird. Die mittleren Verweilzeiten liegen im allgemeinen im Bereich von 0,25 bis 3, bevorzugt zwischen 0,3 und 1 Minute.

Als Komponente B enthalten die Formmassen 5 bis 95, bevorzugt 5 bis 80, insbesondere 25 bis 65 Gew.%, bezogen auf das Gesamtgewicht von A) bis F) mindestens eines Polyamids. Geeignet sind lineare Polyamide z.B. mit einer relativen Viskosität von 2,2 bis 4,5, gemessen in 1 gew.-%iger Lösung in 96 gew.-%iger Schwefelsäure bei 23 °C. Bevorzugt seien genannt Polyamide, die sich von Lactamen mit 7 bis 13 Ringgliedern ableiten, wie Polycaprolactam, Polycapryllactam oder Polyaurinlactam sowie Polyamide, die durch Umsatz von Dicarbonsäuren mit Diaminen erhalten werden. Beispiele hierfür sind Polyamid-6,6, Polyamid-6,12 und das in der EP-A 39 524 beschriebene Polyamid-4,6.

Geeignete Dicarbonsäuren sind beispielsweise Alkandicarbonsäuren mit 5 bis 12, insbesondere 6 bis 10 Kohlenstoffatomen sowie Terephthalsäure und Isophthalsäure sowie beliebige Mischungen dieser Säuren.

Als Diamine seien beispielsweise Alkandiamine mit 4 bis 12, insbesondere 4 bis 8 Kohlenstoffatomen, ferner m-Xylylendiamin, Bis(4-aminophenyl)methan, Bis(4-aminocyclohexyl)methan oder Bis(4-aminophenyl)propan-2,2 oder deren Mischungen genannt.

Es ist auch möglich und manchmal vorteilhaft, Mischungen der genannten Polyamide zu verwenden. Besondere technische Bedeutung haben Polyamid-6 (Polycaprolactam), Polyamid-66 (Polyhexamethylenadipinamid) sowie Polyamide, die aus Hexamethylendiamin und Isophthalsäure sowie

Terephthalsäure aufgebaut sind, erlangt.

Weiterhin seien genannt teilaromatische Copolyamide auf der Basis von Caprolactam, Adipinsäure, Hexamethylendiamin, Terephthalsäure und/oder Isophthalsäure. Von diesen seien Copolyamide mit wiederkehrenden Einheiten, die sich von Caprolactam und/oder Adipinsäure/Hexamethylendiamin einerseits sowie Terephthalsäure und Hexamethylendiamin andererseits ableiten, genannt.

Manchmal ist es vorteilhaft, als Komponente C) einen nichtmodifizierten Polyphenylenether zuzugeben. Dieser entspricht bevorzugt dem als Komponente $a_1$) einsetzbaren Polyphenylenether, weshalb hier auf die dortigen Ausführungen zu geeigneten Verbindungen verwiesen wird. Der Anteil der Komponente C) beträgt, falls vorhanden, maximal 90, vorzugsweise weniger als 40, insbesondere bis zu 5 Gew.%, bezogen auf die Summe der Komponenten A) bis F).

Als weiterer Bestandteil D) können die erfindungsgemäßen Formmassen gegebenenfalls in einer Menge bis zu 45, vorzugsweise bis zu 30, insbesondere bis zu 5 Gew.%, vinylaromatische Polymere (bezogen auf die Summe der Komponenten A) bis F)) enthalten. Geeignet sind bevorzugt mit Polyphenylenethern verträgliche Polymere, wie sie bereits als Komponente $a_2$) beschrieben wurden. Für nähere Einzelheiten sei deshalb auf die Ausführungen zur Komponente $a_2$) verwiesen.

Die Komponente D) kann auch schlagzäh modifiziert sein. Solche Polymere sind dem Fachmann als schlagzähes Polystyrol (HIPS) bekannt. Dabei werden die vinylaromatischen Polymeren in Gegenwart eines Schlagzähmodifiers hergestellt oder die vinylaromatischen Polymeren mit gepfropften Kautschuken abgemischt. Als kautschukartige Polymere seien beispielsweise Polybutadien-, Styrolbutadien-, Styrol-b-butadien, Acrylnitrilbutadien, Ethylenpropylen-, Polyacrylat- und Polyisopren-Kautschuk genannt.

Neben den in der Komponente D) gegebenenfalls vorhandenen, gepfropften Kautschuken, wie Polybutadien-, Acrylat-, Styrol/Butadien-, Polybuten-Kautschuk, hydrierten Styrol/Butadien-, Acrylnitril/Butadien-, Ethylen/Propylen- und Polyisopren-Kautschuken können diese auch ungepfropft als Komponente E) zugesetzt werden. Als schlagzäh modifizierende Kautschuke E) seien weiter erwähnt styrolgepfropfte Ethylen/Propylen-Kautschuke, thermoplastische Ethylen-Propylen-Kautschuke, thermoplastische Polyester-Elastomere, Ethylenkautschuke und Ionomere, besonders bevorzugt Styrol-Butadien-Blockcopolymere einschließlich AB-, ABA-, ABA-verschmiert (taper)-, ABAB-, ABAB-verschmierte Stern-Block-Copolymere und ähnliche, analoge Isopren-Blockpolymerisate und (teil)hydrierte Blockcopolymere.

Daneben kommen als Komponente E) bekannte schlagzähigkeitsverbessernde Elastomere (Kautschuke) für Polyamide in Frage.

Nur beispielsweise seien Kautschuke auf Ethylen-, Propylen-, Butadien- oder Acrylatbasis oder Mischungen dieser Monomeren genannt.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste Gruppe sind die sogenannten Ethylen-Propylen (EPM) bzw. Ethylen-Propylen-Dien-(EPDM)-kautschuke zu nennen, die vorzugsweise ein Verhältnis von Ethylenresten zu Propylenresten im Bereich von 40:60 bis 65:35 aufweisen.

EPM-Kautschuke haben im allgemeinen praktisch keine Doppelbindungen mehr, während EPDM-Kautschuke 1 bis 20 Doppelbindungen/100 C-Atcme aufweisen können.

Als Dien-Monomere für EPDM-Kautschuke seien beispielsweise konjugierte Diene wie Isopren und Butadien, nicht konjugierte Diene mit 5 bis 25 C-Atomen wie Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methylallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethyliden-2-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EPM- bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt.

Eine weitere Gruppe von Kautschuken sind Copolymere des Ethylens mit Acrylsäure- und/oder Methacrylsäureestern, insbesondere solche die zusätzlich noch Epoxid-Gruppen enthalten, wie Vinylglycidylether, Alkylglycidylether mit $C_1$- bis $C_8$-Alkylgruppen, Glycidylacrylat und Glycidylmethacrylat.

Geeignet sind Copolymerisate aus

| | | |
|---|---|---|
| 50 bis 98 | Gew.% | Ethylen, |
| 1 bis 40 | Gew.% | Glycidylacrylat und/oder Glycidylmethacrylat oder Maleinsäureanhydrid, |
| 1 bis 45 | Gew.% | n-Butylacrylat und/oder 2-Ethylhexylacrylat. |

Weitere geeignete Ester der Acryl- und/oder Methacrylsäure sind die Methyl-, Ethyl-, Propyl- und i- bzw. t-Butylester. Auch Acrylsäure bzw. Methacrylsäure selbst können vorteilhaft eingesetzt werden.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen nach DIN 53 735 bei 190 °C und 2,16 kg Belastung).

Geeignete Elastomere E) sind weiterhin Pfropfcopolymerisate aus Butadien, Butadien/Styrol-, Butadien/Acrylnitril und Acrylestern, wie sie z.B. in den DE-A-16 94 174 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk E) können auch Pfropfpolymerisate aus

25 bis 98 Gew.% eines Acrylatkautschuks mit einer Glasübergangstemperatur von unter -20 °C als Pfropfgrundlage

und

2 bis 75 Gew.% eines copolymerisierbaren ethylenisch ungesättigten Monomeren, dessen Homo- bzw. Copolymerisate eine Glasübergangstemperatur von mehr als 25 °C aufweisen, als Pfropfauflage

eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird durch Copolymerisation von im allgemeinen 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat und Triacryloylhexahydro-s-triazin.

Falls die vernetzenden Monomeren mehr als 2 polymerisierbare Doppelbindungen aufweisen, ist es vorteilhaft, ihre Menge auf nicht mehr als 1 Gew.%, bezogen auf die Pfropfgrundlage, zu beschränken.

Gut geeignete Pfropfgrundlagen sind Emulsionspolymerisate mit einem Gelgehalt von mehr als 60 Gew.% (bestimmt in Dimethylformamid bei 25 °C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Es ist in einigen Fällen vorteilhaft, die Polymerisate selbst inhomogen aufzubauen, indem man beispielsweise Monomere, die eine Haftung mit der Komponente B) bewirken, erst gegen Ende der Polymerisation zusetzt. Dadurch wird bewirkt, daß zumindest die Oberfläche der Polymerisatteilchen Molekülgruppen aufweist, die eine Haftung an der Komponente B) bewirken.

Geeignete Monomere sind beispielsweise solche, die im Molekül Carbonsäuregruppen, Carbonsäure liefernde Gruppen, Carbonsäureanhydrid-, Carbonsäureamid-, Epoxid- oder Urethangruppen aufweisen. Beispielhaft seien genannt (Meth-)acrylsäure, Fumarsäure, tert.-Butyl(meth-)acrylat, Maleinsäureanhydrid, (Meth-)acrylamid, Glycidyl(meth-)acrylat oder N-Vinyl-methylurethan.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Es versteht sich, daß auch Mischungen der vorstehend aufgeführten Kautschuktypen eingesetzt werden können.

Die Komponente E) kann in Mengen von 0 bis 40, bevorzugt 0 bis 30, insbesondere 5 bis 20 Gew.%, bezogen auf das Gesamtgewicht von A) bis F), in den erfindungsgemäßen Formmassen vorhanden sein.

Neben den Komponenten A) bis E) können die erfindungsgemäßen thermoplastischen Formmassen auch übliche Zusatzstoffe und Verarbeitungshilfsmittel F) enthalten. Der Anteil dieser Zusätze beträgt im allgemeinen nicht mehr als 60, insbesondere nicht mehr als 40 Gew.%, bezogen auf das Gesamtgewicht der Komponenten A) bis F).

Als Zusatzstoffe seien genannt, Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel, wie Glasfasern, Asbestfasern, Kohlenstoffasern, aromatische Polyamidfasern und/oder Füllstoffe, Gipsfasern, synthetische Calciumsilikate, Kaolin, calciniertes Kaolin, Wollastonit, Talkum, Kreide, ferner Flammschutzmittel wie Phosphat, Phosphorsäureester, Phosphorigsäureester, Phosphinsäureester, Phosphonigsäureester oder organische Phosphinoxide, Halogenverbindungen, ggf. in Kombinationen mit Synergisten, wie Antimontrioxid.

Es können auch Kombinationen solcher Zusatzstoffe eingesetzt werden.Auch andere niedermolekulare oder hochmolekulare Polymere kommen als Zusatzstoffe in Betracht.

Die bisherigen Versuche ergaben, daß solche erfindungsgäßen Formmassen gute Ergebnisse liefern, in denen die Komponenten A) und ggf. C) eine in diskrete Teilchen dispergierte Phase bilden, deren mittlerer Teilchendurchmesser (Volumenmittelwert) zwischen 0,05 und 2,5 µm, bevorzugt zwischen 0,1 und 1,5 µm, insbesondere zwischen 0,5 und 1,0 µm beträgt. In solchen Formmassen enthält die kontinuierliche Phase (Matrix) das Polyamid B). Die übrigen Komponenten können sich in diesen bevorzugten Formmassen in der dispersen und/oder in der kontinuierlichen Phase befinden, oder auch zumindest teilweise eine eigene Phase bilden. Die genannten Teilchendurchmesser kann man auf üblichem Wege über die Auswertung von elektronenmikroskopischen Aufnahmen von Ultradünnschnitten von extrudiertem Granulat erhalten. Die Dünnschnitte werden in bekannter Weise senkrecht zur Extrusionsrichtung des Granulates hergestellt. Im allgemeinen werden mindestens 500 Teilchen ausgewertet.

Die erfindungsgemäßen Formmassen sind erhältlich durch Vermischen der Komponenten bei Temperaturen zwischen 270 und 370, bevorzugt 300 bis 370°C bei einer mittleren Verweilzeit von 15 bis 90, bevorzugt 15 bis 50, insbesondere 15 bis 25 Sekunden, wobei die Komponente A) zu Beginn des Mischens eine Temperatur über 350°C und unter 370°C, bevorzugt von 352 bis 365°C aufweist. Die anderen Komponenten haben zu Beginn des Mischens im allgemeinen eine Temperatur von 250 bis 350, vorzugsweise von 260 bis 320°C.

Geeignet zur Herstellung der Formmassen sind übliche Mischvorrichtungen, wie Einschneckenextruder oder vorzugsweise Zweischneckenextruder, die die obengenannten Arbeitsbedingungen erlauben. Um eine möglichst homogene Formmasse zu erhalten, ist eine intensive Durchmischung notwendig. Die Abmischreihenfolge der Komponenten kann variiert werden, so können zwei oder ggf. drei Komponenten vorgemischt werden, es können aber auch alle Komponenten gemeinsam gemischt werden. Die Mischungen werden in bekannter Weise weiterverarbeitet.

Wie der Fachmann erkennt, ist es zur Einstellung der Temperatur und der Verweilzeit erforderlich, die Temperierung und die Fördergeschwindigkeit aufeinander abzustimmen, was in einfachen Vorversuchen leicht geschehen kann. Es hat sich darüber hinaus gezeigt, daß auch das beim Mischen angewandte Schergefälle, wie es z.B. in VDI, Messen an Extrusionsanlagen, VDI-Verlag GmbH, Düsseldorf, 1978, S. 2 beschrieben wird, eine Rolle spielen kann.

Gute Ergebnisse werden erzielt, wenn in einem Extruder die Komponenten A) bis F) beim Mischen einem maximalen Schergefälle j zwischen 800 und 1500 $sec^{-1}$, bevorzugt 900 bis 1300 $sec^{-1}$ ausgesetzt werden. Das maximale Schergefälle im Sinne dieser Erfindung nach der Formel

$$j = \frac{\pi \cdot d \cdot U}{h} \quad [s^{-1}]$$

berechenbar. Darin bedeuten h die engste Spaltbreite zwischen dem Zylinder des Extruders und der äußersten Kante der sich im Zylinder drehenden Schnecke (in cm), U die Rotationsgeschwindigkeit der Schnecke ( in Umdrehung pro sec.) und d den Durchmesser des Zylinders in cm).

Zur Herstellung der erfindungsgemäßen Formmassen wird das im folgenden beschriebene Verfahren besonders bevorzugt, da es die thermische Belastung des Polphenylenethers vorteilhaft verringert.

Es wird ein Zweischneckenextruder mit gleichlaufenden Schnecken eingesetzt. Die Förderschnecken können Schubkanten aufweisen, und es können Knetelemente und/oder Mischelemente vorhanden sein. Darüber hinaus ist es möglich und häufig vorteilhaft, teilweise, d.h. abschnittsweise stauende oder rückfördernde Elemente im Extruder zu verwenden, um Verweilzeit und Mischungseigenschaften zu beeinflussen.

Der Extruder ist in mindestens zwei, vorzugsweise drei und ggf. auch in mehr Zonen unterteilt.

Der modifizierte Polyphenylenether wird bei diesem besonders bevorzugten Verfahren in der ersten Zone des Extruders durch Umsetzen der Komponenten $a_1$) bis $a_5$) unter den oben angegebenen Bedingungen hergestellt und anschließend zur Herstellung der erfindungsgemäßen Formmasse im folgenden Teil des Extruders eingesetzt. Die erste Zone des Extruders weist im allgemeinen eine Länge von 3,5 bis 30, bevorzugt 10 bis 25 D (D = Durchmesser der Schnecke) auf.

In der Nähe der Dosieröffnung in der ersten Zone sind an der Schnecke bevorzugt Förderelemente angebracht, im weiteren Verlauf können sich auch Knetelemente befinden. Am Ende der ersten Zone ist besonders bevorzugt mindestens ein rückförderndes Element vorhanden, mit dem die Verweilzeit in der ersten Zone beeinflußt werden kann.

Zum modifizierten Polyphenylenether A) werden zu Beginn der zweiten Zone die Komponenten B) bis F) gemeinsam zugegeben. Bevorzugt erfolgt die Dosierung mit einem Seitenextruder mit temperierbarem Mantel, in dem die Komponenten B) bis F) eindosiert, aufgeschmolzen und dem Anfang der zweiten Zone des Extruders zugeführt werden.

Im allgemeinen ist der Schneckendurchmesser des Seitenextruders geringer als der des Hauptextruders und die Schneckenlänge liegt im Bereich von 5 bis 40 D, vorzugsweise zwischen 10 bis 20 D. Die Temperatur der Komponenten, die aus dem Seitenextruder dem modifizierten Polyphenylenether A) zugeführt werden, liegt im Bereich von 250 bis 350 °C, vorzugsweise von 260 bis 320 °C. Die Schnecke des Seitenextruders kann so gestaltet sein, daß die Komponenten vor der Dosierung in den Hauptextruder bereits vorgemischt sind.

Die zweite Zone des Hauptextruders, in der dann der modifizierte Polyphenylenether A) mit den aus dem Beginn der zweiten Zone zudosierten Komponenten abgemischt wird, hat im allgemeinen eine Länge von 5 bis 40 D, vorzugsweise von 10 bis 20 D. Die Temperatur des modifizierten Polyphenylenethers liegt bei Beginn des Mischens mit den anderen Komponenten, d.h. dort, wo die Komponenten aus dem Seitenextruder zugeführt werden, über 350 °C und unter 370 °C, bevorzugt zwischen 352 und 365 °C. Die mittleren Verweilzeiten in dieser Zone betragen 15 bis 90, bevorzugt 15 bis 50, insbesondere 15 bis 25 Sekunden.

In manchen Fällen kann es vorteilhaft sein, den in der ersten Extruderzone modifizierten Polyphenylenether vor dem Zusammenmischen mit den Komponenten B) bis F), das in der zweiten Extruderzone stattfindet, in einer weiteren Extruderzone zu entgasen, d.h. von flüchtigen Anteilen zu befreien. Diese weiteren Extruderzone befindet sich, wenn vorhanden, zwischen der ersten und der zweiten Zone. Geeignete apparative Ausführungsformen solcher Entgasungszonen sind bekannt. Gute Ergebnisse werden erzielt, wenn man das Entgasen durch Anlegen von Vakuum unterstützt. Diese weitere Extruderzone kann unabhängig von einer Entgasung auch dazu benutzt werden, um den modifizierten Polyphenylenether auf die beim Beginn des Mischens mit den Komponenten B) und ggf. C) bis F) nötige Temperatur zu bringen. Dieses wird insbesondere dann bevorzugt, wenn man den Polyphenylenether bei tieferen Temperaturen modifiziert. Die Länge dieser Zone ist in weiteren Bereichen frei wählbar, Längen zwischen 3 und 10 D haben sich bewährt.

Nach der Zugabe aller Komponenten und deren Abmischung in den verschiedenen erwähnten Zonen des Hauptextruders kann vorteilhaft in einer weiteren Zone eine Entgasung durchgeführt werden. Geeignete apparative Ausführungsformen solcher Entgasungszonen sind an sich bekannt. Die Länge dieser Zone beträgt vorzugsweise von 3 bis 10 D, die Temperatur liegt im Bereich von 250 bis 300 °C. Bevorzugt wird die Entgasung durch Anlegen eines Vakuums unterstützt.

Nach der Entgasung wird die nach diesen besonders bevorzugte Verfahren hergestellte Mischung aus dem Extruder ausgetragen und anschließend in an sich bekannter Weise weiterverarbeitet.

Die erfindungsgemäßen Formmassen zeichnen sich durch eine besondere helle Eigenfarbe, hohe Oxidationsbeständigkeit und eine hohe Schlagzähigkeit aus. Beispielsweise weisen erfindungsgemäße Formmassen aus 30 bis 45 Gew.% A), 42 bis 50 Gew.% B), 0 bis 5 Gew.% C), 0 bis 5 Gew.% D) und 10

bis 15 Gew.% E), wobei die Gew.% hier jeweils auf das Gesamtgewicht von A) bis E) bezogen sind, eine Kerbschlagzähigkeit bei -40°C, gemessen nach DIN 53 453 an bei 280°C gespritzten Normkleinstäben, von über 12 kJ/m² auf.

Die erfindungsgemäßen Formmassen eignen sich besonders zur Herstellung von Formkörpern durch Spritzguß oder Extrusion.

Beispiele 1 bis 3 und Vergleichsversuche I und II

Die Formmassen der Beispiele und Vergleichsversuche wurden in einem Zweischneckenextruder (Firma Werner & Pfleiderer) hergestellt. Der Schneckendurchmesser betrug 80 mm. Die Längen der einzelnen Zonen sind in Vielfachen des Schneckendurchmessers (D) angegeben.

Die erste Zone des Extruders war 14 D lang und hatte am Anfang eine Einspeiseöffnung für feste Substanzen $a_1$) bis $a_5$). Diese Substanzen wurden über Dosierwaren zugeführt. Unter der Einspeiseöffnung waren die Schneckenelemente förderwirksam ausgestaltet, dieser Zonenteil (5D) wurde gekühlt auf 20°C. Der Extrudermantel des nächsten Zonenteils (5D) wurde auf 280°C erhitzt. Der Rest der ersten Zone (4D) hatte eine Manteltemperatur von 280°C. Im mittleren Teil der ersten Zone befanden sich Knetelemente auf der Schnecke. Am Ende der Schnecke war ein zurückförderndes Element eingebaut. In allen Beispielen und Vergleichsversuchen wurde der Polyphenylenether innerhalb von im Mittel 30 Sekunden modifiziert.

Es schließt sich eine weitere Zone des Extruders von 4 D Länge an, die zur Temperaturanpassung des modifizierten Polyphenylenethers dient.

Die zweite Zone des Extruders war 16 D lang und hatte am Anfang seitlich eine Einspeiseöffnung. Der Rest der zweiten Zone war außer zur Entgasungszone hin geschlossen. Die Komponenten B), C), D) und E) wurden durch die seitliche Einspeiseöffnung in die zweite Zone mit einem Seitenextruder gefördert. Der Extrudermantel der zweiten Zone wurde auf 285°C erhitzt. Die Schnecke trug Knetelemente.

Der Seitenextruder war ein Zweischneckenextruder mit einem Schneckendurchmesser von 64 mm und 134 D Länge. Die Temperatur der Extrudermäntel des Seitenextruders betrugen 280°C. Am Anfang des Seitenextruders wurden die Substanzen durch Dosierwaagen zugeführt und am Ende des Seitenextruders in die seitliche Einspeiseöffnung der zweiten Zone zugeführt.

Die Entgasungszone des Extruders war 8 D lang und hatte am Anfang eine Entgasungsöffnung, an die ein Vakuum von 100 Torr angelegt wurde. Im zweiten Teil der Entgasungszone wurde ein Druck aufgebaut, um das Produkt über eine Lochdüse auszutragen. Das Produkt wurde durch ein Wasserbad gezogen und anschließend granuliert und getrocknet.

Im einzelnen wurden folgende Komponenten eingesetzt:

$a_1$: Poly-(2,6-dimethyl-1,4-phenylen)ether mit einer relativen Viskosität von 0,63, gemessen in 1 gew.%iger $CHCl_3$-Lösung bei 25°C.

$a_2$: Polystyrol PS 144 C, Fa. BASF, MFI 200/5,0 = 24 g/10 min.

$a_3$/1: Fumarsäure

$a_3$/2: Maleinsäure

$a_4$/: 2,3-Diphenyl-2,3-dimethylbutan (Initiator D 407 der Fa. Akzo Chemie)

B/1: Polyamid-6,6 mit einer relativen Viskosität von 3,0, gemessen bei 23°C in 1-gew.%iger Lösung in 96 %iger $H_2SO_4$.

B/2: Polyamid-6 mit einer relativen Viskosität von 2,2, gemessen bei 23°C in 1 gew.-%iger Lösung in 96 %iger $H_2SO_4$.

B/3: Teilaromatisches Copolyamid, hergestellt nach folgender Vorschrift:

Eine wäßrige Lösung, bestehend aus 35 kg ε-Caprolactam, 55 kg Terephthalsäure, 38,5 kg Hexamethylendiamin und 128,5 kg Wasser wurde aus einem beheizten Vorratsbehälter bei ca. 80°C mit einer Geschwindigkeit entsprechend einer Polyamidmenge von 5 kg/Stunde mittels einer Dosierpumpe in einen teilweise horizontal, teilweise vertikal angeordneten Röhrenverdampfer befördert. Der Verdampfer war mit einem flüssigen Wärmeträger, der eine Temperatur von 295°C hatte, bei kräftiger Umwälzung beheizt. Der Verdampfer hatte eine Länge von 3 m und einen Inhalt von 180 ml und eine wärmeübertragende Oberfläche von etwa 1300 cm². Die Verweilzeit im Verdampfer betrug 50 sec. Das aus dem Verdampfer austretende Gemisch aus Präpolymeren und Wasserdampf hatte eine Temperatur von 290°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne

mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152 °C ein. Der nach dem Entspannungsventil austretende Wasserdampf wurde kondensiert und hatte einen Gehalt an Hexamethylendiamin von weniger als 0,05 Gew.% und einen Gehalt an $\epsilon$-Caprolactam von weniger als 0,1 Gew.%. Als Kolonnensumpf erhielt man eine wäßrige Lösung von Hexamethylendiamin, die 80 Gew.% Hexamethylendiamin und 1 bis 3 % $\epsilon$-Caprolactam, jeweils bezogten auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und einen äußerst niedrigen Gehalt an Bis-hexamethylentriamin von 0,17 % sowie eine relative Viskosität von 1,65 bis 1,80, gemessen in 96 gew.%iger Schwefelsäure bei 20 °C.

Das Produkt wies in etwa eine Äquivalenz von Carboxyl- und Aminoendgruppen auf.

Im Austragsextruder wurde die Schmelze dann auf Normaldruck entspannt und bei einer Verweilzeit von weniger als 1 Minute praktisch nicht mehr weiter kondensiert. Das erhaltene Granulat wurde durch kontinuierliche Festphasenkondensation mit überhitztem Wasserdampf bei 195 °C und einer Verweilzeit von 30 Stunden auf eine Endviskosität von $\eta$-rel = 2,50 kondensiert.

C: Entspricht Komponente $a_1$

D: Entspricht Komponente $a_2$

E/1: Styrol-Butadien-Styrol-Blockcopolymerisat, hergestellt durch anionische Polymerisation (32 Gew.% Styrol, 68 Gew.% Butadien) mit Mw = 95 000

E/2: Styrol-Butadien(hydriert)-styrol-blockkautschuk, hergestellt durch anionische Polymerisation mit anschließender Hydrierung des Polybutadienblockes mit 35 Gew.% Styrol, 65 Gew.% Butadien (hydriert) mit Mw = 65 000.

E/3: Ethylenpolymeres aus 70 Gew.% Ethylen, 29 Gew.% n-Butylacrylat und 1 Gew.% Maleinsäureanhydrid mit einem MFI von 20 g/10 min.

In Tabelle 1 sind die Einsatzmengen der Komponenten und die Herstellbedingungen der Formmassen angegeben.

Tabelle 1

(Mengenangaben in Gew.-Teilen)

| | Vergleichsversuch I | Vergleichsversuch II | Beispiel 1 | Beispiel 2 | Beispiel 3 |
|---|---|---|---|---|---|
| Erste Zone | | | | | |
| $a_1$ | 30 | 40 | 34 | 30 | 40 |
| $a_2$ | 4 | 2 | 2,5 | 4 | 2 |
| $a_3$ | 0,6 ($a_3$/2) | 0,6 ($a_3$/1) | 0,4 ($a_3$/1) | 0,6 ($a_3$/2) | 0,6 ($a_3$/1) |
| $a_4$ | 0,027 | 0,013 | 0,015 | 0,027 | 0,013 |
| zweite Zone | | | | | |
| B | 45,5 $B_2$ | 46 $B_3$ | 44 $B_1$ | 45,5 $B_2$ | 46 $B_3$ |
| C | 4 | | 3,5 | 4 | |
| D | 4,5 | | 2,0 | 4,5 | |
| E | 12 $E_2$ | 10 $E_1$<br>2 $E_2$ | 14 $E_1$ | 12 $E_2$ | 10 $E_1$<br>2 $E_2$ |
| Drehzahl des Hauptextruders [Upm] | 380 | 185 | 250 | 270 | 290 |
| Drehzahl des Seitenextruders [Upm] | 300 | 300 | 300 | 300 | 300 |
| mittlere Verweilzeit beim Mischen [s] | | | 20 | 20 | 20 |
| Temperatur von A) bei Beginn des Mischens*) | 385 | 337 | 352 | 358 | 363 |

*) gemessen an der Stelle der zweiten Zone des Hauptextruders, an der die Einspeiseöffnung für den Seitenextruder liegt.

Die Ergebnisse der Messungen der Kerbschlagzähigkeit nach DIN 53 453 sind in Tabelle 2 aufgeführt. Die entsprechenden Prüfkörper (Normkleinstäbe) wurden bei 280 °C im Spritzguß hergestellt.

Tabelle 2

| | | Kerbschlagzähigkeit Raumtemperatur | [kJ/m2] -40 °C |
|---|---|---|---|
| Beispiel | 1 | 36 | 17 |
| | 2 | 45 | 15 |
| | 3 | 32 | 14 |
| Vergleichsversuch | I | 11 | 5 |
| | II | 17 | 10 |

**Ansprüche**

1. Thermoplastische Formmassen, enthaltend als wesentliche Komponenten
A) 5 - 95 Gew.-% eines modifizierten Polyphenylenethers,
B) 5 - 95 Gew.-% eines Polyamids sowie darüber hinaus
C) 0 - 95 Gew.-% eines nicht-modifizierten Polyphenylenethers,
D) 0 - 45 Gew.-% eines vinylaromatischen Polymeren,
E) 0 - 40 Gew.-% eines schlagzäh modifizierenden Kautschuks und
F) 0 - 60 Gew.-% Zusatzstoffe und Verarbeitungshilfsmittel,
herstellbar durch Vermischen der Komponenten A) bis F) bei Temperaturen zwischen 270 und 370 °C während 15 bis 90 Sekunden, wobei die Komponente A) zu Beginn des Mischens eine Temperatur über 350 und unter 370 °C aufweist.

2. Formmassen nach Anspruch 1, enthaltend
30 - 45 Gew.-% A),
25 - 65 Gew.-% B),
0 - 40 Gew.-% C),
0 - 30 Gew.-% D),
5 - 20 Gew.-% E) und
0 - 40 Gew.-% F.

3. Formmassen nach mindestens einem der Ansprüche 1 und 2, wobei der modifizierte Polyphenylenether A) hergestellt ist aus
$a_1$) 50 - 99,95 Gew.-% eines Polyphenylenethers
$a_2$) 0 - 45 Gew.-% eines vinylaromatischen Polymeren,
$a_3$) 0,05 - 10 Gew.-% einer $\alpha,\beta$-ungesättigten Dicarbonsäure oder deren Derivaten der allgemeinen Formel I

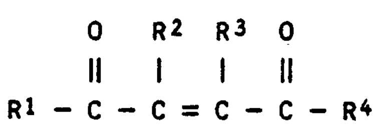

(I)

wobei
$R^1$ und $R^4$ Hydroxylgruppen, Aryloxy-, Alkoxy-, Aralkoxy- oder Cycloalkoxygruppen mit bis zu 12 C-Atomen oder gemeinsam -O-oder -$NR^5$-,
$R^2$ und $R^3$ Wasserstoff, eine Alkyl- oder Cycloalkylgruppe mit bis zu 12 C-Atomen, eine Arylgruppe, Chlor oder gemeinsam eine Alkylengruppe mit 4 bis 12 C-Atomen,
$R^5$ Wasserstoff, eine Alkyl-, Cycloalkyl-, Aralkyl- oder Arylgruppe mit bis zu 12 C-Atomen, die ihrerseits durch $C_1$-$C_4$-Alkyl- oder -Alkoxygruppen substituiert sein kann, darstellen,
$a_4$) 0 bis 5 Gew.-% eines Radikalstarters
und

$a_5$) 0 bis 80 Gew.-% weiterer pfropfaktiver Monomerer,
wobei die Angaben der Komponenten $a_1$) bis $a_5$) in Gew.-% sich jeweils auf das Gesamtgewicht der Komponenten $a_1$) bis $a_5$) beziehen.

4. Formmassen nach mindestens einem der Ansprüche 1 bis 2, wobei der modifizierte Polyphenylenether A) hergestellt ist aus
$a_1$) 50 - 99,95 Gew.-% eines Polyphenylenethers
$a_2$) 0 - 45 Gew.-% eines vinylaromatischen Polymeren,
$a_3$) 0,05 - 10 Gew.-% eines mindestens eine Amidgruppe, Lactamgruppe, Epoxidgruppe, Hydroxylgruppe oder Oxazolingruppe enthaltenden Monomeren und
$a_4$) 0,02 - 0,09 Gew.-% eines Radikalstarters,
wobei die Angaben der Komponenten $a_1$) bis $a_4$) in Gew.-% sich jeweils auf das Gesamtgewicht der Komponenten $a_1$) bis $a_4$) beziehen.

5. Formmassen nach mindestens einem der Ansprüche 1 bis 4, wobei die Komponente $a_4$) ein hochverzweigtes Alkan der allgemeinen Struktur

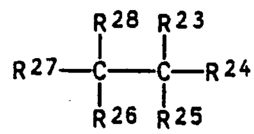

ist, in der $R^{23}$ bis $R^{28}$ unabhängig voneinander Alkylgruppen mit 1 bis 8 C-Atomen, Alkoxygruppen mit 1 bis 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen.

6. Formmassen nach mindestens einem der Ansprüche 1 bis 5, herstellbar durch Vermischen der Komponenten A) bis F) in einem Extruder bei einem maximalen Schergefälle j zwischen 800 und 1500 $sec^{-1}$.

7. Verfahren zur Herstellung von thermoplastischen Formmassen gemäß mindestens einem der Ansprüche 1 bis 6 in einem Extruder, dadurch gekennzeichnet, daß man
I) in einer ersten Zone bei Temperaturen von 240 bis 350 °C durch Umsetzen von
$a_1$) 50 - 99,95 Gew.-% eines Polyphenylenethers
$a_2$) 0 - 45 Gew.-% eines vinylaromatischen Polymeren,
$a_3$) 0,05 - 10 Gew.-% mindestens einer Verbindung aus der Gruppe
$a_{31}$)einer $\alpha,\beta$-ungesättigten Dicarbonsäure oder deren Derivaten der allgemeinen Formel I

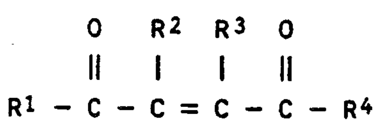

(I)

wobei
$R^1$ und $R^4$ Hydroxylgruppen, Aryloxy-, Alkoxy-, Aralkoxy- oder Cycloalkoxygruppen mit bis zu 12 C-Atomen oder gemeinsam -O-oder -$NR^5$-,
$R^2$ und $R^3$ Wasserstoff, eine Alkyl- oder Cycloalkylgruppe mit bis zu 12 C-Atomen, eine Arylgruppe, Chlor oder gemeinsam eine Alkylengruppe mit 4 bis 12 C-Atomen,
$R^5$ Wasserstoff, eine Alkyl-, Cycloalkyl-, Aralkyl- oder Arylgruppe mit bis zu 12 C-Atomen, die ihrerseits durch $C_1$-$C_4$-Alkyl- oder -Alkoxygruppen substituiert sein kann, darstellen, und
$a_{32}$)eines mindestens eine Amidgruppe, Lactamgruppe, Epoxidgruppe, Hydroxylgruppe oder Oxazolingruppe enthaltenden Monomeren sowie darüber hinaus
$a_4$) 0 bis 5 Gew.-% eines Radikalstarters und
$a_5$) 0 bis 80 Gew.-% weiterer pfropfaktiver Monomerer, wobei die Angaben der Komponenten $a_1$) bis $a_5$) in Gew.-% sich jeweils auf das Gesamtgewicht der Komponenten $a_1$) bis $a_5$) beziehen,
über einen Zeitraum von 0,25 bis 3 min einen modifizierten Polyphenylenether (A) herstellt und
II) anschließend 5 bis 95 Gew.% dieses modifizierten Polyphenylenethers A) in einer zweiten Zone des Extruders bei 270 bis 370 °C während 15 bis 90 Sekunden mit
B) 5 bis 95 Gew.-% eines Polyamids,
C) 0 bis 90 Gew.-% eines nicht-modifizierten Polyphenylenethers
D) 0 bis 45 Gew.-% eines vinylaromatischen Polymeren,

E) 0 bis 40 Gew.-% eines schlagzäh modifizierenden Kautschuks und

F) 0 bis 60 Gew.-% Zusatzstoffen und Verarbeitungshilfsmitteln, wobei sich die Angaben der Komponenten A) bis F) in Gew.-% auf das Gesamtgewicht der Komponenten A) bis F) beziehen,

so vermischt, daß die Komponente A) zu Beginn des Mischens eine Temperatur über 350 und unter 370°C aufweist.

8. Verfahren nach Anspruch 7, wobei die Komponente A) beim Beginn des Vermischens eine Temperatur von 352 bis 365°C aufweist.

9. Verfahren nach mindestens einem der Ansprüche 7 und 8, dadurch gekennzeichnet, daß man die Komponenten A) bis F) bei einem maximalen Schergefälle j zwischen 800 und 1500 $sec^{-1}$ vermischt.

10. Verwendung der thermoplastischen Formmassen gemäß mindestens einem der Ansprüche 1 bis 6 zur Herstellung von Formkörpern.